# EUROPEAN PATENT APPLICATION

(11) **EP 4 184 841 A1**
(43) Date of publication of application: **24.05.2023**
(21) Application number: 21842079.2
(22) Date of filing: 07.07.2021
(51) Int. Cl.: H04L 5/00, H04W 24/08

(54) **CSI MEASUREMENT REPORTING METHOD, TERMINAL, AND NETWORK-SIDE DEVICE**

(30) Priority: 15.07.2020 CN 202010679201
(71) Applicant: Datang Mobile Communications Equipment Co., Ltd., Beijing 100085 (CN)
(72) Inventor: CHEN, Runhua, Beijing 100085 (CN); SONG, Lei, Beijing 100085 (CN); SU, Xin, Beijing 100085 (CN); GAO, Qiubin, Beijing 100085 (CN)
(74) Representative: Cabinet Nony
(86) International application number: PCT/CN2021/105055
(87) International publication number: WO 2022/012393

(57) **Abstract**

The present application relates to the technical field of radio communication and specifically relates to a CSI measurement reporting method, a terminal, and a network-side device. The terminal of the embodiments of the present application determines an antenna port parameter on the basis of a preset rule or configuration information of the network-side device; receives and measures, on the basis of the antenna port parameter determined, a CSI reference signal in at least one resource unit configured by the network-side device; generates, on the basis of the measurement result from measuring the CSI reference signal in the at least one resource unit, a reporting parameter value and reports same to the network-side device. The method by which the terminal of the embodiments of the present application determines the antenna port parameter allows the terminal to use all antenna port sets or antenna arrays to receive and measure the CSI reference signal, thus reporting the measurement report acquired by using all of the antenna port sets or antenna arrays, and allowing the network-side device to acquire a relatively superior antenna port set or antenna array.

## Description

### Cross-Reference of Related Applications

The present application claims the priority from Chinese Patent Application No. 202010679201.4, filed with the Chinese Patent Office on July 15, 2020 and entitled "CSI Measurement Reporting Method, Terminal, and Network-Side Device", which is hereby incorporated by reference in its entirety.

### Field of Invention

The present application relates to the field of wireless communication technologies, and particularly to a CSI measurement reporting method, a terminal, and a network-side device.

### Background

The fifth generation of mobile communication technology (5th generation wireless systems, 5G) is the latest generation of cellular mobile communication technology. The terminal in the 5G system has multiple antenna array panels, the terminal can receive the downlink data sent by the network-side device through the multiple antenna array panels, and the channel state between each antenna array panel of the terminal and the network-side device is different.

In order to determine the channel states between different antenna array panels of the terminal and the network-side device, the network-side device may configure a CSI (Channel State Information) reference signal resource setting and a CSI reporting setting for the terminal; the network-side device sends a CSI reference signal to the terminal through the CSI reference signal resource setting configured for the terminal, and the terminal measures the CSI reference signal to obtain a measurement result for the CSI reference signal resource setting and reports the measurement result.

### Brief Summary

Embodiments of the present application provide a CSI measurement reporting method, a terminal and a network-side device, so as to improve the accuracy of determining antenna ports by the terminal when the terminal has multiple antenna array panels.

In a first aspect, an embodiment of the present application provides a CSI measurement reporting method, including:
determining, by a terminal, an antenna port parameter according to a first predefined rule or configuration information of a network-side device;
receiving and measuring, by the terminal, a CSI reference signal in at least one resource element configured by the network-side device according to the determined antenna port parameter;
generating and reporting, by the terminal, a reporting quantity to the network-side device according to a measurement result of measuring the CSI reference signal in the at least one resource element.

Optionally, the method further includes:
determining, by the terminal, an association relationship between antenna port parameters and at least one resource element according to a second predefined rule or the configuration information of the network-side device.

Optionally, the association relationship includes at least one of:
one resource element is associated with an antenna port parameter;
at least two resource elements are associated with a same antenna port parameter;
at least two resource elements are associated with different antenna port parameters;
each of at least two resource elements corresponds to one antenna port parameter.

Optionally, the configuration information of the network-side device includes:
indication information for indicating the terminal to use a same antenna port parameter or different antenna port parameters to receive and measure the CSI reference signal in the at least one resource element; or
an antenna port parameter; wherein the antenna port parameter is the antenna port parameter used by the terminal to receive and measure the CSI reference signal in the at least one resource element.

Optionally, determining, by the terminal, the antenna port parameter according to the first predefined rule, includes:
determining, by the terminal, the antenna port parameter from candidate antenna port parameters corresponding to the terminal according to the first predefined rule.

Optionally, the first predefined rule includes at least one of:
Rule 1: determining that antenna port parameters corresponding to different resource elements or CSI reference signals in resource elements are same or different according to a quantity of resource elements or CSI reference signals in resource elements;
Rule 2: determining that antenna port parameters are different according to at least two resource elements with a same index or CSI reference signals in the resource elements;
Rule 3: determining that antenna port parameters are same or different according to at least two resource elements with different indexes or CSI reference signals in the resource elements;
Rule 4: determining that antenna port parameters are different according to at least two resource elements with a same spatial Quasi-Co-Location (QCL) relation or CSI reference signals in the resource elements;
Rule 5: determining that antenna port parameters are same or different according to at least two resource elements with different spatial QCL relations or CSI reference signals in the resource elements.

Optionally, sending, by the terminal, the reporting quantity to the network-side device, includes:
reporting, by the terminal, the reporting quantity including an antenna port parameter to the network-side device; wherein the antenna port parameter included in the reporting quantity is the antenna port parameter used by the terminal to measure and obtain the measurement result.

Optionally, the terminal generates the reporting quantity in a following way:
reporting, by the terminal, one reporting quantity for each resource element; or
reporting, by the terminal, one reporting quantity for all resource elements; or
reporting, by the terminal, one reporting quantity for every N/M resource elements, wherein N is a quantity of resource elements, and M is a quantity of report parameters (measurement parameters refer to report parameters in some embodiments) configured or predefined by network.

Optionally, types of the resource elements include at least one of CSI resource setting, CSI resource set in CSI resource setting, CSI resource or Synchronization Signal Block (SSB) resource.

Optionally, when the network-side device configures at least two resource elements, the at least two resource elements are resource elements with same or different time-domain transmission characteristics; or
the at least two resource elements are CSI resource sets corresponding to a same periodic CSI resource setting; or
the at least two resource elements are CSI resource sets corresponding to a same semi-persistent CSI resource setting; or
the at least two resource elements are aperiodic CSI resource sets associated with an aperiodic trigger state; or
the at least two resource elements are CSI resources included in a same CSI resource setting or CSI resource set.

Optionally, the antenna port parameter includes at least one of an antenna array panel, an antenna port set, or a spatial filter.

Optionally, the terminal receives the CSI reference signal in the at least one resource element configured by the network-side device in a following way:
receiving, by the terminal, the CSI reference signal in the at least one resource element configured by the network-side device on a same time domain resource or different time domain resources.

Optionally, before the terminal determines the antenna port parameter according to the configuration information of the network-side device, the method further includes:
receiving, by the terminal, the configuration information sent by the network-side device through higher layer signaling; or
receiving, by the terminal, the configuration information sent by the network-side device through MAC-CE signaling; or
receiving, by the terminal, the configuration information sent by the network-side device through downlink control information.

In a second aspect, an embodiment of the present application provides another CSI measurement reporting method, including:
sending, by a network-side device, configuration information to a terminal, so that the terminal determines, according to the configuration information, an antenna port parameter that needs to be used to receive and measure a CSI reference signal in at least one resource element configured by the network-side device;
sending, by the network-side device, the CSI reference signal to the terminal through the at least one resource element configured, so that the terminal performs CSI measurement on the CSI reference signal and generates a reporting quantity according to a measurement result;
receiving, by the network-side device, the reporting quantity reported by the terminal.

Optionally, the configuration information of the network-side device includes:
indication information for indicating the terminal to use a same antenna port parameter or different antenna port parameters to receive and measure the CSI reference signal in the at least one resource element; or
an antenna port parameter; wherein the antenna port parameter is the antenna port parameter used by the terminal to receive and measure the CSI reference signal in the at least one resource element.

Optionally, the reporting quantity includes the antenna port parameter used by the terminal to measure and obtain the measurement result;
after the network-side device receives the reporting quantity reported by the terminal, the method further includes:
determining, by the network-side device, an antenna port parameter used by the terminal to receive downlink data from a plurality of antenna port parameters corresponding to the terminal according to the reporting quantity including the antenna port parameter.

Optionally, types of the resource elements include at least one of CSI resource setting, CSI resource set in CSI resource setting, CSI resource or SSB resource.

Optionally, the at least two resource elements are resource elements with same or different time-domain transmission characteristics; or
the at least two resource elements are CSI resource sets corresponding to a same periodic CSI resource setting; or
the at least two resource elements are CSI resource sets corresponding to a same semi-persistent CSI resource setting; or
the at least two resource elements are aperiodic CSI resource sets associated with an aperiodic trigger state; or
the at least two resource elements are CSI resources included in a same CSI resource setting or CSI resource set.

Optionally, the antenna port parameter includes at least one of an antenna array panel, an antenna port set, or a spatial filter.

Optionally, sending, by the network-side device, the configuration information to the terminal, includes:
sending, by the network-side device, the configuration information to the terminal through higher layer signaling; or
sending, by the network-side device, the configuration information to the terminal through MAC-CE signaling; or
sending, by the network-side device, the configuration information to the terminal through downlink control information.

In a third aspect, an embodiment of the present application provides a terminal, including a processor, a memory and a transceiver;
wherein the processor is configured to read a program in the memory to:
determine an antenna port parameter according to a first predefined rule or configuration information of a network-side device;
receive and measure a CSI reference signal in at least one resource element configured by the network-side device according to the determined antenna port parameter;
generate and report a reporting quantity to the network-side device according to a measurement result of measuring the CSI reference signal in the at least one resource element.

Optionally, the processor is further configured to:
determine an association relationship between antenna port parameters and at least one resource element according to a second predefined rule or the configuration information of the network-side device.

Optionally, the association relationship includes at least one of:
one resource element is associated with an antenna port parameter;
at least two resource elements are associated with a same antenna port parameter;
at least two resource elements are associated with different antenna port parameters;
each of at least two resource elements corresponds to one antenna port parameter.

Optionally, the configuration information of the network-side device includes:
indication information for indicating the terminal to use a same antenna port parameter or different antenna port parameters to receive and measure the CSI reference signal in the at least one resource element; or
an antenna port parameter; wherein the antenna port parameter is the antenna port parameter used by the terminal to receive and measure the CSI reference signal in the at least one resource element.

Optionally, the processor is specifically configured to:
determine the antenna port parameter from candidate antenna port parameters corresponding to the terminal according to the first predefined rule.

Optionally, the first predefined rule includes at least one of:
Rule 1: determining that antenna port parameters corresponding to different resource elements or CSI reference signals in resource elements are same or different according to a quantity of resource elements or CSI reference signals in resource elements;
Rule 2: antenna port parameters determined according to at least two resource elements with a same index or CSI reference signals sent in the resource elements are different;
Rule 3: antenna port parameters determined according to at least two resource elements with different indexes or CSI reference signals sent in the resource elements are same or different;
Rule 4: antenna port parameters determined according to at least two resource elements with a same spatial QCL relation or CSI reference signals sent in the resource elements are different;
Rule 5: antenna port parameters determined according to at least two resource elements with different spatial QCL relations or CSI reference signals sent in the resource elements are same or different;
Rule 6: a preset correspondence between resource elements and antenna port parameters.

Optionally, the processor is specifically configured to:
report the reporting quantity including an antenna port parameter to the network-side device; wherein the antenna port parameter included in the reporting quantity is the antenna port parameter used by the terminal to measure and obtain the measurement result.

Optionally, the processor is specifically configured to determine the reporting quantity to be sent to the network-side device in a following way:
reporting one reporting quantity for each resource element; or
sending one reporting quantity for all resource elements; or
sending one reporting quantity for every N/M resource elements, wherein N is a quantity of resource elements, and M is a quantity of measurement parameters configured or predefined by network.

Optionally, types of the resource elements include at least one of CSI resource setting, CSI resource set in CSI resource setting, CSI resource or SSB resource.

Optionally, the at least two resource elements are resource elements with same or different time-domain transmission characteristics; or
the at least two resource elements are CSI resource sets corresponding to a same periodic CSI resource setting; or
the at least two resource elements are CSI resource sets corresponding to a same semi-persistent CSI resource setting; or
the at least two resource elements are aperiodic CSI resource sets associated with an aperiodic trigger state; or
the at least two resource elements are CSI resources included in a same CSI resource setting or CSI resource set.

Optionally, the antenna port parameter includes at least one of an antenna array panel, an antenna port set, or a spatial filter.

Optionally, the processor is specifically configured to:
receive the CSI reference signal in the at least one resource element configured by the network-side device on a same time domain resource or different time domain resources.

Optionally, the processor is further configured to:
receive the configuration information sent by the network-side device through higher layer signaling before determining the antenna port parameter according to the configuration information of the network-side device; or
receive the configuration information sent by the network-side device through MAC-CE signaling; or
receive the configuration information sent by the network-side device through downlink control information.

In a fourth aspect, an embodiment of the present application provides a network-side device, including a processor, a memory and a transceiver;
wherein the processor is configured to read a program in the memory to:
send configuration information to a terminal, so that the terminal determines, according to the configuration information, an antenna port parameter that needs to be used to receive and measure a CSI reference signal in at least one resource element configured by the network-side device;
send the CSI reference signal to the terminal through the at least one resource element configured, so that the terminal performs CSI measurement on the CSI reference signal and generates a reporting quantity according to a measurement result;
receive the reporting quantity reported by the terminal.

Optionally, the configuration information of the network-side device includes:
indication information for indicating the terminal to use a same antenna port parameter or different antenna port parameters to receive and measure the CSI reference signal in the at least one resource element; or
an antenna port parameter; wherein the antenna port parameter is the antenna port parameter used by the terminal to receive and measure the CSI reference signal in the at least one resource element.

Optionally, the reporting quantity includes the antenna port parameter used by the terminal to measure and obtain the measurement result;
the processor is further configured to:
determine an antenna port parameter used by the terminal to receive downlink data from a plurality of antenna port parameters corresponding to the terminal according to the reporting quantity including the antenna port parameter after receiving the reporting quantity reported by the terminal.

Optionally, types of the resource elements include at least one of CSI resource setting, CSI resource set in CSI resource setting, CSI resource or SSB resource.

Optionally, the at least two resource elements are resource elements with same or different time-domain transmission characteristics; or
the at least two resource elements are CSI resource sets corresponding to a same periodic CSI resource setting; or
the at least two resource elements are CSI resource sets corresponding to a same semi-persistent CSI resource setting; or
the at least two resource elements are aperiodic CSI resource sets associated with an aperiodic trigger state; or
the at least two resource elements are CSI resources included in a same CSI resource setting or CSI resource set.

Optionally, the antenna port parameter includes at least one of an antenna array panel, an antenna port set, or a spatial filter.

Optionally, the processor is specifically configured to:
send the configuration information to the terminal through higher layer signaling; or
send the configuration information to the terminal through MAC-CE signaling; or
send the configuration information to the terminal through downlink control information.

In a fifth aspect, an embodiment of the present application provides a CSI measurement reporting apparatus, including:
a determining module configured to determine an antenna port parameter according to a first predefined rule or configuration information of a network-side device;
a measurement module configured to receive and measure a CSI reference signal in at least one resource element configured by the network-side device according to the determined antenna port parameter;
a first sending module configured to generate and report a reporting quantity to the network-side device according to a measurement result of measuring the CSI reference signal in the at least one resource element.

In a sixth aspect, an embodiment of the present application provides a CSI measurement reporting apparatus, including:
a second sending module configured to send configuration information to a terminal, so that the terminal determines, according to the configuration information, an antenna port parameter that needs to be used to receive and measure a CSI reference signal in at least one resource element configured by the network-side device;
a third sending module configured to send the CSI reference signal to the terminal through the at least one resource element configured, so that the terminal performs CSI measurement on the CSI reference signal and generates a reporting quantity according to a measurement result;
a receiving module configured to receive the reporting quantity reported by the terminal.

In a seventh aspect, an embodiment of the present application provides a computer storage medium storing computer program instructions, where the instructions, when running on a computer, cause the computer to perform the method as described in the above-mentioned first or second aspect.

In the embodiments of the present application, during the CSI measurement process, the terminal can determine the antenna port parameter for receiving the CSI reference signal according to the predefined rule or the configuration information of the network-side device, and the terminal receives and measures the CSI reference signal in at least one resource element configured by the network-side device according to the determined antenna port parameter after the network-side device sends the CSI reference signal to the terminal through at least one resource element; and thus the terminal can use all antenna port sets or antenna array panels to receive and measure the CSI reference signal, and then report the measurement result obtained by using all the antenna port sets or antenna array panels, so that the network device side obtains the relatively better antenna port set or antenna array panel. In the subsequent communication process between the network-side device and the terminal, the network device side can configure the terminal to use the better antenna port set or antenna array panel to receive the downlink data, further improving the system performance.

### Brief Description of the Drawings

FIG. 1 is a schematic diagram of a CSI measurement reporting system according to an embodiment of the present application;
FIG. 2 is a structural schematic diagram of a terminal according to an embodiment of the present application;
FIG. 3 is a structural schematic diagram of a network-side device according to an embodiment of the present application;
FIG. 4 is a structural schematic diagram of a CSI measurement reporting apparatus according to an embodiment of the present application;
FIG. 5 is a structural schematic diagram of another CSI measurement reporting apparatus according to an embodiment of the present application;
FIG. 6 is a flow chart of a CSI measurement reporting method according to an embodiment of the present application;
FIG. 7 is a flow chart of another CSI measurement reporting method according to an embodiment of the present application.

### Detailed Description of the Embodiments

In order to enable those ordinary skilled in the art to better understand the technical solutions of the present application, the technical solutions in the embodiments of the present application will be described clearly and completely with reference to the accompanying drawings.

It should be noted that the terms such as "first", "second" and the like in the specification, claims and drawings of the present application are used to distinguish the similar objects, rather than to describe a particular order or sequence. It should be understood that the data used in this way is interchangeable under appropriate circumstances, so that the embodiments of the present application described herein can be implemented in an order other than those illustrated or described herein. The implementations described in the following exemplary embodiments do not represent all the implementations consistent with the present application. On the contrary, they are only the examples of the devices and methods which are detailed in the attached claims and consistent with some aspects of the present application.

Some terms that appear herein will be explained below.
1. The term "and/or" in the embodiments of the present application describes the association relationship of associated objects, indicating that there may be three relationships, for example, A and/or B may represent: only A, both A and B, and only B. The character "/" generally indicates that the associated objects have a kind of "or" relationship.
2. Terminal is also called User Equipment (UE), Mobile Station (MS), Mobile Terminal (MT), etc., and is a device for providing the voice and/or data connectivity to the user, for example, a handheld device or vehicle-carried device with the wireless connection function, etc. At present, some examples of the terminal are: mobile phone, tablet, laptop, palmtop computer, Mobile Internet Device (MID), wearable device, Virtual Reality (VR) device, Augmented Reality (AR) equipment, wireless terminal in the industrial control, wireless terminal in the self driving, wireless terminal in the remote medical surgery, and wireless terminal in the smart grid, wireless terminal in the transportation safety, wireless terminal in the smart city, wireless terminal in the smart home, etc.
3. Network-side device may be a Radio Access Network (RAN) node or base station. The RAN is a part in the network that connects the terminal to the wireless network. The RAN node (or device) is a node (or device) in the radio access network, and may also be called base station. At present, some examples of the RAN node are: generation Node B (gNB), Transmission Reception Point (TRP), evolved Node B (eNB), Radio Network Controller (RNC), Node B (NB), Base Station Controller (BSC), Base Transceiver Station (BTS), home base station (for example, home evolved NodeB (HeNB) or Home Node B (HNB)), Base Band Unit (BBU), or Wireless Fidelity (Wifi) Access Point (AP), etc. Furthermore, in a network structure, the RAN may include a Centralized Unit (CU) node and a Distributed Unit (DU) node.

The network architectures and service scenarios described in the embodiments of the present application are intended to illustrate the technical solutions of the embodiments of the present application more clearly, and do not constitute a limitation on the technical solutions provided in the embodiments of the present application. As can be known by those ordinary skilled in the art, with the evolution of network architectures and the emergence of new service scenarios, the technical solutions provided in the embodiments of the present application are also applicable to similar technical problems.

In order to make the objects, technical solutions and advantages of the present application clearer, the present application will be further illustrated below in details with reference to the accompanying figures. Obviously the described embodiments are merely a part of the embodiments of the present application but not all the embodiments. Based upon the embodiments of the present application, all of other embodiments obtained by those ordinary skilled in the art without creative work pertain to the protection scope of the present application.

When a terminal has a plurality of antenna array panels, the network-side device will send a plurality of beams in different directions to the terminal for the beam measurement of the terminal when performing the beam management. The network-side device sends the CSI reference signal to the terminal through different CSI reference signal source settings configured for the terminal. Since the terminal has the plurality of antenna array panels, the terminal can only select one of the plurality of antenna array panels randomly to receive and measure the CSI reference signal when receiving the CSI reference signal sent by the network-side device, and report the measurement result obtained from the measurement. Afterwards, the subsequent beam indications of the network-side device are all performed based on the measurement result reported in the CSI measurement process. If the antenna array panel used by the terminal to receive the CSI reference signal during the CSI measurement process has poor transmission quality, the downlink data transmission will fail if the terminal continues using the poor antenna array panel to receive when the network-side device subsequently sends downlink data to the terminal after the terminal reports the measurement result.

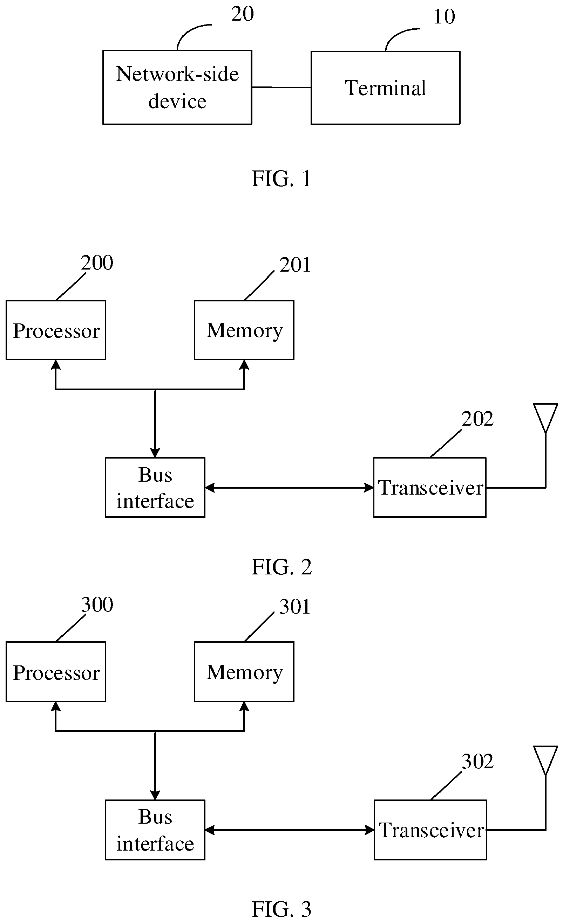

Based on the above problem, as shown in FIG. 1, an embodiment of the present application provides a CSI measurement reporting system, including a terminal 10 and a network-side device 20.

The terminal 10 is configured to: determine an antenna port parameter according to a predefined rule or the configuration information of the network-side device; receive and measure a CSI reference signal in at least one resource element configured by the network-side device according to the determined antenna port parameter; and generate and report a reporting quantity to the network-side device according to a measurement result of measuring the CSI reference signal in the at least one resource element.

The network-side device 20 is configured to: send the configuration information to the terminal, so that the terminal determines, according to the configuration information, the antenna port parameter that needs to be used to receive and measure the CSI reference signal in the at least one resource element configured by the network-side device; send the CSI reference signal to the terminal through the at least one resource element configured, so that the terminal performs CSI measurement on the CSI reference signal and generates the reporting quantity according to the measurement result; and receive the reporting quantity reported by the terminal.

In the embodiment of the present application, during the CSI measurement process, the terminal can determine the antenna port parameter for receiving the CSI reference signal according to the predefined rule or the configuration information of the network-side device, and the terminal receives and measures the CSI reference signal in at least one resource element configured by the network-side device according to the determined antenna port parameter after the network-side device sends the CSI reference signal to the terminal through at least one resource element; and thus the terminal can use all antenna port sets or antenna array panels to receive and measure the CSI reference signal, and then report the measurement result obtained by using all the antenna port sets or antenna array panels, so that the network device side obtains the relatively better antenna port set or antenna array panel. In the subsequent communication process between the network-side device and the terminal, the network device side can configure the terminal to use the better antenna port set or antenna array panel to receive the downlink data, further improving the system performance.

Here, the resource element in the embodiment of the present application may be at least one of a CSI resource setting, a CSI resource set in a CSI resource setting, or a CSI resource.

It should be noted that one CSI resource setting may include a plurality of CSI resource sets, and one CSI resource set may include a plurality of CSI resources. A CSI resource set may be a Non-Zero Power CSI resource set (NZP-CSI-RS-ResourceSet), a zero power CSI resource set (CSI-IM-ResourceSet), or a CSI resource set composed of SSB resources (CSI-SSB-ResourceSet). Correspondingly, a CSI resource may be a Non-Zero Power CSI resource (NZP CSI-RS resource), a zero power CSI resource (CSI-IM resource), or an SSB resource.

At least one resource element in the embodiment of the present application may be at least one CSI resource setting, or at least one resource element may be at least one CSI resource set in the same CSI resource setting, or at least one resource element may be at least one CSI resource in the same CSI resource setting, or at least one resource element may be at least one CSI resource in the same CSI resource set.

When the network-side device sends the CSI reference signal to the terminal, the CSI reference signal is carried by the CSI resource in the configured resource element.

Assuming that the resource element is a CSI resource set, if the CSI resource set includes a plurality of CSI resources, there are also a plurality of CSI reference signals in this resource element.

When the network-side device configures at least two resource elements for sending CSI reference signals for the terminal, the at least two resource elements are resource elements with same or different time-domain transmission characteristics; or the at least two resource elements are at least two CSI resource sets corresponding to a same periodic CSI resource setting; or the at least two resource elements are at least two CSI resource sets corresponding to a same semi-persistent CSI resource setting; or the at least two resource elements are at least two aperiodic CSI resource sets associated with an aperiodic trigger state or corresponding to an aperiodic CSI resource setting; or the at least two resource elements are CSI resources included in a same CSI resource setting or CSI resource set.

In the embodiment of the present application, when determining the antenna port parameter for receiving the CSI reference signal, the terminal may determine according to the predefined rule, or the terminal may determine according to the configuration information sent by the network-side device. In the following, different ways to determine the antenna port parameter will be illustrated respectively.

In the first way, the terminal determines the antenna port parameter according to the predefined rule.

In this way, the terminal stores the predefined rule in advance. When the terminal needs to receive the reference signal in at least one resource element configured by the network-side device, the terminal determines the antenna port parameter required to receive the reference signal in at least one resource element according to the predefined rule.

In an optional embodiment, the predefined rule in the embodiment of the present application includes at least one of:
Rule 1: determining that antenna port parameters corresponding to different resource elements or CSI reference signals in resource elements are same or different according to the number of resource elements or CSI reference signals in resource elements;
Rule 2: determining that antenna port parameters are different according to at least two resource elements with a same index or CSI reference signals in the resource elements;
Rule 3: determining that antenna port parameters are same or different according to at least two resource elements with different indexes or CSI reference signals in the resource elements;
Rule 4: determining that antenna port parameters are different according to at least two resource elements with a same spatial QCL relation or CSI reference signals in the resource elements;
Rule 5: determining that antenna port parameters are same or different according to at least two resource elements with different spatial QCL relations or CSI reference signals in the resource elements.

It should be noted that the network-side device sends the resource configuration information to the terminal before the terminal determines the antenna port parameter used to receive the CSI reference signal in at least one resource element configured by the network-side device, and the terminal can determine the number of resource elements configured by the network-side device for the terminal and the specific resource elements according to the resource configuration information sent by the network-side device. The terminal determines the antenna port parameter according to the resource configuration information sent by the network-side device and according to at least one of the above-mentioned rules.

When the network-side device configures one resource element for the terminal, since this resource element may include a plurality of resource elements with smaller granularity, the antenna port parameter that needs to be used may be determined according to at least one of the above-mentioned rules 1 to 5 based on the resource elements with smaller granularity included in this resource element when determining to receive the CSI reference signal in one resource element configured by the network-side device.

For example, if the network-side device configures a CSI resource set for the terminal and the CSI resource set includes a plurality of CSI resources, then the terminal may determine the antenna port parameter that needs to be used according to at least one of the above-mentioned rules 1 to 5 based on the plurality of CSI resources included in the CSI resource set.

If the terminal determines at least two resource elements configured for the terminal according to the resource configuration information sent by the network-side device, the terminal may determine the antenna port parameter according to at least one of the above-mentioned rules 1 to 5.

For the above rule 1, the terminal determines that the antenna port parameters corresponding to at least two resource elements are the same or different according to the number of resource elements or CSI reference signals in resource elements.

When a specific number of resource elements is configured for the terminal, the terminal determines to use the same or different receiving antenna port parameters to receive the CSI reference signals in the resource elements; wherein the specific number may be predefined in the specification. For example, when the number of resource elements is 2, for example, when a CSI resource setting includes at least two CSI resource sets or a CSI resource set includes at least two CSI resources, the terminal determines to use different receiving antenna port parameters to receive the CSI reference signals in the resource elements. For another example, when the number of CSI resource elements is N, the terminal determines to use the same or different antenna port parameters to receive the CSI reference signals in the resource elements.

Furthermore, based on the above-mentioned rule 1, the terminal may also determine that the CSI reference signals in the resource elements are sent by the network-side device using the same or different antenna port parameters, according to the determined number of resource elements or CSI reference signals in the resource elements. For example, when the number of resource elements is 2, for example, when a CSI resource setting includes at least two CSI resource sets or a CSI resource set includes at least two CSI resources, the terminal determines that the CSI reference signals in the resource elements are sent by the network-side device using different antenna port parameters; for another example, when the number of CSI resource elements is N, the terminal determines that the CSI reference signals in the resource elements are sent by the network-side device using the same antenna port parameters.

In an implementation, the terminal determines the indexes of at least two resource elements configured for the terminal according to the resource configuration information sent by the network-side device.

For the above rule 2, the terminal determines that the antenna port parameters corresponding to at least two resource elements are different according to at least two resource elements with the same index or the CSI reference signals in the resource elements.

If the indexes of at least two resource elements are the same, it means that the network-side device sends the CSI reference signals through two same resource elements. According to this configuration, the terminal may determine to use different antenna parameters to receive the CSI reference signals in at least two resource elements; for example, the terminal uses different receiving antenna array panels or different receiving antenna port sets or different receiving spatial filters to receive the CSI reference signals in at least two resource elements, and measures and reports the CSI reference signals in at least two resource elements based on the antenna port parameters. Thus, the network-side device can know the measurement results of the same resource element by the terminal using different antenna port parameters, and then can determine which antenna port parameter for receiving the CSI reference signal has better performance.

For the above rule 3, the terminal determines that the antenna port parameters corresponding to at least two resource elements are the same or different according to at least two resource elements with different indexes or the CSI reference signals in the resource elements.

If the indexes of at least two resource elements are different, the terminal may use the same or different antenna port parameters to receive the CSI reference signals in at least two CSI resource elements, so that the terminal can determine which resource element corresponds to the better sent signal according to the measurement results.

In an implementation, the terminal determines the spatial QCL relations of at least two resource elements configured for the terminal according to the resource configuration information sent by the network-side device.

For the above rule 4, the terminal determines that the antenna port parameters corresponding to at least two resource elements are different according to at least two resource elements with the same spatial QCL relation or the CSI reference signals in the resource elements.

When the spatial QCL relations of at least two resource elements configured by the network-side device for the terminal are the same, the terminal determines to use different receiving antenna port parameters to receive the CSI reference signals in the resource elements.

Furthermore, when the spatial QCL relations of at least two resource elements configured by the network-side device for the terminal are the same, the terminal may also determine that the CSI reference signals in the resource elements are sent by the network-side device using different antenna port parameters.

For the above rule 5, the terminal determines that the antenna port parameters corresponding to at least two resource elements are the same or different according to at least two resource elements with different spatial QCL relations or the CSI reference signals in the resource elements.

When the spatial QCL relations of at least two resource elements configured by the network-side device for the terminal are different, the terminal determines to use the same or different receiving antenna port parameters to receive the CSI reference signals in the resource elements.

When the spatial QCL relations of at least two resource elements configured by the network-side device for the terminal are different, the terminal may also determine that the CSI reference signals in the resource elements are sent by the network-side device using the same or different antenna port parameters.

Furthermore, the antenna port parameter corresponding to each resource element may also be defined in advance. After the network-side device sends the resource configuration information to the terminal, the terminal determines the antenna port parameter corresponding to each resource element according to the resource element configured by the network-side device for the terminal included in the resource configuration information and the correspondence between resource elements and antenna port parameters.

Furthermore, in an embodiment of the present application, when the antenna port parameter is determined according to the predefined rule, the antenna port parameter may be determined from the candidate antenna port parameters corresponding to the terminal according to the predefined rule.

For example, assuming that the candidate antenna port parameters configured for the terminal are two antenna array panels, the terminal may determine an antenna array panel used to receive and measure the CSI reference signal in at least one resource element from the two antenna array panels according to the predefined rule.

In the second way, the terminal determines the antenna port parameter according to the configuration information of the network-side device.

In an implementation, the network-side device sends the configuration information to the terminal, and the terminal determines the antenna port parameter used to receive the CSI reference signal in at least one resource element according to the configuration information sent by the network-side device.

It should be noted that the network-side device may send the configuration information to the terminal specifically in one of the following ways.

In the first way, the network-side device sends the configuration information to the terminal through higher layer signaling.

Here, the higher layer signaling parameters include at least one of: the configuration in a CSI reporting setting or its underlying parameter configuration, the beam reporting configuration based on group or its underlying parameter configuration, the configuration in a CSI resource element or its underlying parameter configuration.

1. The higher layer signaling parameters are the configuration in the CSI reporting setting or its underlying parameter configuration.

The network-side device may configure the antenna port parameter used by the terminal to receive the CSI reference signal in at least one resource element configured by the network-side device directly in the CSI reporting setting (CSI-ReportConfig). For example, which or which group of antenna array panel(s) or receiving antenna port set(s) or receiving filter(s) is/are used by the terminal to measure and report the CSI reference signals in the resource elements is configured in the CSI reporting setting. For example, the network device side sends two CSI reporting setting configurations that are associated with the same CSI resource element, and the two CSI reporting setting configurations configure the terminal to use different antenna port parameters for measuring and reporting, so that the network device side can determine which receiving antenna array panel has better performance according to the measurement results reported by the terminal.

Furthermore, the receiving antenna port parameters can also be configured in the IE under the CSI reporting setting configuration, such as IE groupBasedBeamReporting.

2. The higher layer signaling parameters are the beam reporting configuration based on group or its underlying parameter configuration.

In the R16 specification, the beam reporting based on group or not based on group is configured under IE

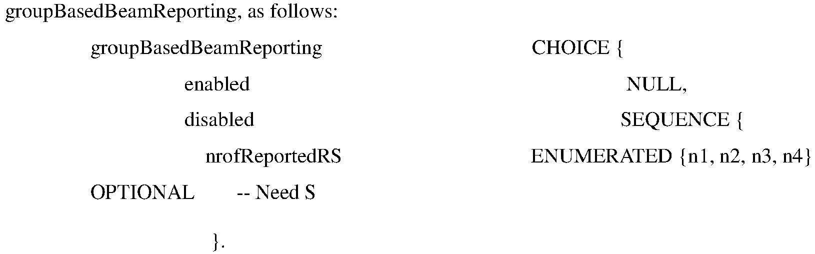

In an embodiment of the present application, the antenna port parameter may be added to groupBasedBeamReporting, or to the IE enabled configuration or disabled configuration or nrofReportedRS configuration under groupBasedBeamReporting. The IE of the antenna port parameter, for example, may be called antenna_info, or may be replaced by other parameter name.

For example:

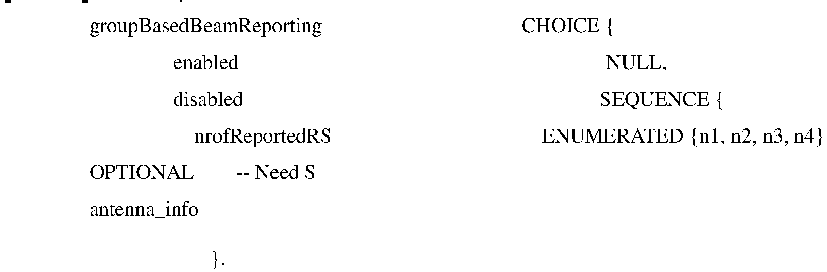

For another example:

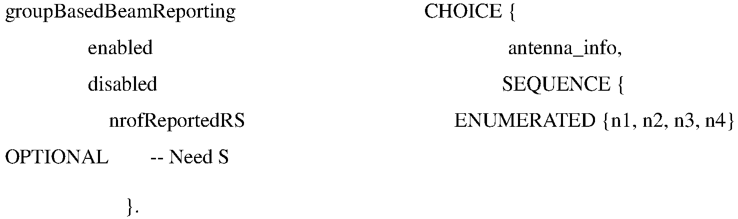

For another example:

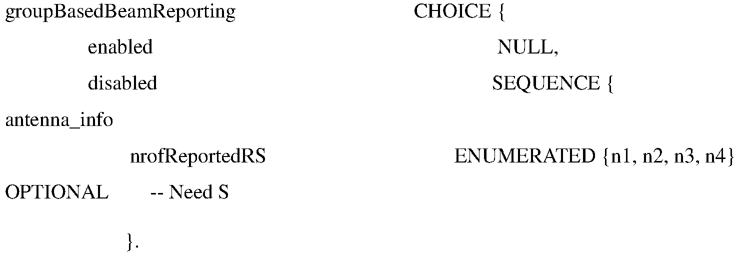

3. The higher layer signaling parameters are the configuration in a CSI resource element or its underlying parameter configuration.

In an embodiment of the present application, the receiving antenna port parameters may be configured in the CSI resource element configuration or its underlying IE; for example, IE CSI-ResourceConfig, NZP-CSI-RS-ResourceSet, CSI-IM-ResourceSet, CSI-SSB-ResourceSet, CSI-IM-Resource, NZP-CSI-RS-Resource, etc., representing the receiving antenna port parameters used by the terminal when receiving the CSI resource element or used by the network-side device when sending the CSI resource element.

The specific content related to antenna_info may be:

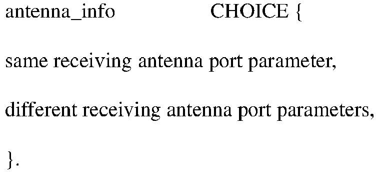

For another example:

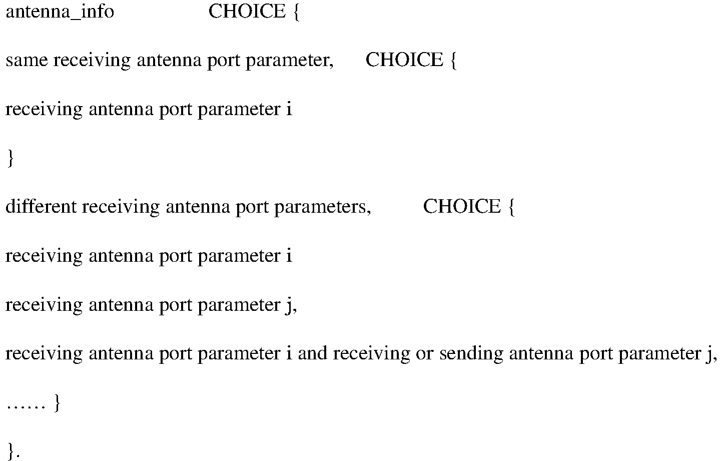

In the second way, the network-side device sends the configuration information to the terminal through MAC Control Element (MAC-CE) signaling.

In the third way, the network-side device sends the configuration information to the terminal through Downlink Control Information (DCI).

In an optional embodiment, the configuration information sent by the network-side device to the terminal includes:
indication information for indicating the terminal to use a same antenna port parameter or different antenna port parameters to receive and measure the CSI reference signal in the at least one resource element; or
an antenna port parameter; wherein the antenna port parameter is the antenna port parameter used by the terminal to receive and measure the CSI reference signal in the at least one resource element.

For example, the network-side device instructs the terminal to use the same antenna port parameter to receive and measure the CSI reference signal in at least one resource element by sending the configuration information to the terminal; or
the network-side device instructs the terminal to use different antenna port parameters to receive and measure the CSI reference signal in at least one resource element by sending the configuration information to the terminal; or
the network-side device indicates the antenna port parameter used to receive and measure the CSI reference signal in at least one resource element to the terminal by sending the configuration information to the terminal; for example, the network-side device instructs the terminal to use the antenna array panel i and/or antenna array panel j to receive and measure the CSI reference signal in at least one resource element; or the network-side device instructs the terminal to use the antenna port group m and/or antenna port group n to receive and measure the CSI reference signal in at least one resource element.

Furthermore, the network-side device may also notify the terminal of the antenna port parameter used by the network-side device to send the CSI reference signal of at least one resource element.

For example, the network-side device notifies the terminal that the network-side device uses the same antenna port set or Transmission Configuration Indicator (TCI) to send the CSI reference signal in at least one CSI resource element, or the network-side device uses different antenna port sets or TCIs to send the CSI reference signal in at least one CSI resource element.

In an embodiment of the present application, the terminal determines an association relationship between antenna port parameters and at least one resource element according to the predefined rule or the configuration information of the network-side device.

Here, when the network-side device configures one resource element, the association relationship includes: one resource element is associated with an antenna port parameter.

When the network-side device configures at least two resource elements, the association relationship includes at least one of:
at least two resource elements are associated with a same antenna port parameter;
at least two resource elements are associated with different antenna port parameters;
each of at least two resource elements corresponds to one antenna port parameter.

For example, the association means that at least two resource elements are received by associated antenna port parameters, or at least two resource elements are sent by associated antenna port parameters on the network device side. For example, the network-side device configures two resource elements, and each resource element is associated with a kind of antenna port parameter, for example, the first resource element is associated with a receiving antenna array panel or receiving antenna port combination, and the second resource element is associated with another receiving antenna array panel. After determining the associated antenna port parameters, the terminal can use the antenna array panels indicated by the antenna port parameters to receive the corresponding resource elements. For another example, a CSI resource set includes at least two CSI resources, and each CSI resource is associated with a kind of antenna port parameter, or the first N/2 CSI resources are associated with a kind of antenna port parameter, and the last N/2 CSI resources are associated with another kind of antenna port parameter. After determining the associated antenna port parameters, the terminal can use the antenna array panels, antenna port sets or spatial filters indicated by the antenna port parameters to receive the corresponding CSI resources.

In the embodiment of the present application, after the terminal determines the antenna port parameter used to receive the CSI reference signal in at least one resource element configured by the network-side device, the terminal receives and measures the CSI reference signal in at least one resource element configured by the network-side device through the determined antenna port parameter, and sends the reporting quantity to the network-side device.

In an optional embodiment, when the terminal receives and measures the CSI reference signal in at least one resource element configured by the network-side device through the determined antenna port parameter, the terminal receives the CSI reference signal in the at least one resource element configured by the network-side device on a same time domain resource or different time domain resources.

Here, the time domain resource may be one slot, or one Orthogonal Frequency Division Multiplexing (OFDM) symbol, or more than one slot, or more than one OFDM symbol.

The reporting quantity sent by the terminal to the network-side device includes at least the antenna port parameter used to obtain the measurement result.

For example, the terminal measures the CSI reference signal in the resource element A configured by the network-side device, and reports the reporting quantity obtained by measuring the CSI reference signal in the resource element A. Then the reported quantity includes an antenna port parameter used to receive the CSI reference signal in the resource element A. In addition, the reporting quantity may also include an antenna port parameter used by the network-side device to send the CSI reference signal in the resource element A.

When at least two resource elements are configured, the CSI reference signals in the resource elements may be received using different antenna port parameters and may be sent using different antenna port parameters, so there may be different measurement results. When at least two resource elements are associated with one CSI reporting setting, the measurement results will be reported for the at least two CSI resource elements. In order to feed back different measurement results to the network at the same time, it may be specified that the terminal reports the CSI in the following ways.

In an implementation, the terminal may determine the reporting quantity to be sent to the network-side device in the following ways.

In the first way, the terminal reports one reporting quantity for each resource element.

When the terminal receives the CSI reference signals in the resource elements using different receiving antenna port parameters and/or the network-side device sends the CSI reference signals in the resource elements using different sending antenna port parameters, or when the configurations of the CSI resource elements are different, the terminal determines to report one reporting quantity for each resource element.

The different receiving or sending antenna port parameters include: the network device side directly instructs the terminal to use different receiving or sending antenna port parameters to send or receive resource elements, or the terminal judges, according to the receiving or sending antenna port parameters indicated by the network device side, that the receiving or sending antenna port parameters of two resource elements are different (for example, one is the receiving or sending antenna port parameter i, and the other is the receiving or sending antenna port parameter j).

In the second way, the terminal reports one reporting quantity according to all resource elements.

For example, the network-side device configures multiple resource elements for the terminal, then the terminal measures the CSI reference signals in the multiple resource elements, and reports one reporting quantity for the multiple resource elements.

It should be noted that the terminal can obtain one measurement result for the CSI reference signal in one resource element, and then the terminal determines one reporting quantity according to the measurement results corresponding to all the resource elements; specifically, the calculation may be performed on the measurement results corresponding to all the resource elements to determine one reporting quantity, for example, the received power values of multiple measured resource elements are used to calculate the power ratio of channel to interference noise as the reporting quantity, or the measurement result with the best quality among the measurement results corresponding to all the resource elements may be used as the reporting quantity, for example, the Layer 1 Reference Signal Received Power (L1-RSRP) values measured for all the resource elements are compared to select the L1-RSRP value with the best quality as the reporting quantity.

In the third way, the terminal reports one reporting quantity for every N/M resource elements, where N is the number of resource elements, and M is the number of measurement parameters configured or predefined by network.

When the network-side device configures the terminal to report M measurement parameters (for example, M = one of 1, 2, 3 and 4 for non-group-based reporting, or M = 2 for group-based reporting), the terminal side will report M reporting quantities according to N resource elements configured by the network-side device. It may be pre-specified that the terminal reports one reporting quantity for every N/M resource elements.

When the terminal reports one reporting quantity for every N/M resource elements, the terminal determines one reporting quantity according to the measurement results obtained by measuring the CSI reference signals in the N/M resource elements, and determines M reporting quantities in total for reporting.

Here, the value of the number M of measurement parameters may be predefined as 2 (for example, group-based reporting), and the terminal side will report 2 reporting quantities according to the N resource elements configured by the network-side device. It may be pre-specified that the terminal reports one reporting quantity for the first N/2 resource elements and reports one reporting quantity for the last N/2 resource elements, wherein N is an even number or N is not an odd number.

In an embodiment of the present application, the reporting quantity sent by the terminal to the network side may be cri-RSRP, ssb-Index-RSRP, cri-SINR-r16, ssb-Index-SINR-r16, cri-RI-CQI, cri-RI-PMI-CQI, cri-RI-i1, cri-RI-i1-CQI, cri-RI-LI-PMI-CQI. In addition, the receiving or sending antenna port parameter used by the CSI resource element may also be included, to indicate a certain reporting quantity is measured based on which receiving or sending antenna port parameter. In this way, the terminal may also select K port parameters measured better for feedback from a plurality of receiving or sending antenna port parameters that are preset or configured by the network-side device.

The receiving or sending antenna port parameters may be reported by the following method: P bits are used to represent up to 2^P kinds of receiving or sending antenna port parameters, for example, P may be equal to 1, and the bits '0' and '1' represent the use of the same receiving or sending antenna port parameter and the use of different receiving or sending antenna port parameters respectively; N may also be greater than or equal to 2, and each codepoint represents a receiving or sending antenna port parameter or a combination of two or more receiving or sending antenna port parameters.

When the terminal is configured to report K L1-RSRP values, the content reported by the terminal may be:
receiving or sending antenna port parameter or parameter combination 1, L1-RSRP value 1, receiving or sending antenna port parameter or parameter combination 2, L1-RSRP value 2, ....., receiving or sending antenna port parameter or parameter combination K, L 1- RSRP value K.

The above reported content may also be extended to other CSI reporting, such as combination reporting of layer1-signal to interference plus noise ratio (L1-SINR), CSI-RS Resource Indicator (CRI), Channel Quality Indication (CQI), Precoding Matrix Indicator (PMI), Rank Indicator (RI), etc., and there is only a need to replace the L1-RSRP value with a corresponding CSI reporting value.

After the terminal reports the determined reporting quantity to the network-side device, the network-side device may determine an antenna port parameter used by the terminal to receive the downlink data from a plurality of antenna port parameters corresponding to the terminal according to the reporting quantity sent by the terminal.

Furthermore, the network-side device may also determine an antenna port parameter used to send the downlink data to the terminal from a plurality of antenna port parameters.

Based on the same inventive concept, an embodiment of the present application further provides a terminal. Since the principle of the terminal to solve the problem is similar to that of the CSI measurement reporting system in the embodiment of the present application, the implementations of the terminal can refer to the implementations of the system, and the repeated description thereof will be omitted here.

As shown in FIG. 2, a terminal according to an embodiment of the present application includes: a processor 200, a memory 201, a transceiver 202 and a bus interface.

The processor 200 is responsible for managing the bus architecture and general processing, and the memory 201 may store the data used by the processor 200 when performing the operations. The transceiver 202 is configured to receive and send the data under the control of the processor 200.

The bus architecture may include any numbers of interconnected buses and bridges, and specifically link various circuits of one or more processors represented by the processor 200 and the memory represented by the memory 201. The bus architecture may further link various other circuits such as peripheral device, voltage regulator and power management circuit, which are all well known in the art and thus will not be further described again herein. The bus interface provides an interface. The processor 200 is responsible for managing the bus architecture and general processing, and the memory 201 may store the data used by the processor 200 when performing the operations.

The procedure disclosed by the embodiment of the present application may be applied in the processor 200 or implemented by the processor 200. In the implementation process, each step of the signal processing flow may be completed by the integrated logic circuit of hardware in the processor 200 or the instruction in the form of software. The processor 200 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the present application. The general-purpose processor may be a microprocessor or any conventional processor or the like. The steps of the method disclosed in combination with the embodiments of the present application may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 201, and the processor 200 reads the information in the memory 201 and completes the steps of the signal processing flow in combination with its hardware.

Specifically, the processor 200 is configured to read the program in the memory 201 to:
determine an antenna port parameter according to a predefined rule or configuration information of a network-side device;
receive and measure a CSI reference signal in at least one resource element configured by the network-side device according to the determined antenna port parameter;
generate and report a reporting quantity to the network-side device according to a measurement result of measuring the CSI reference signal in the at least one resource element.

Optionally, the processor 200 is further configured to:
determine an association relationship between antenna port parameters and at least one resource element according to the predefined rule or the configuration information of the network-side device.

Optionally, the association relationship includes at least one of:
one resource element is associated with an antenna port parameter;
at least two resource elements are associated with a same antenna port parameter;
at least two resource elements are associated with different antenna port parameters;
each of at least two resource elements corresponds to one antenna port parameter.

Optionally, the configuration information of the network-side device includes:
indication information for indicating the terminal to use a same antenna port parameter or different antenna port parameters to receive and measure the CSI reference signal in the at least one resource element; or
an antenna port parameter; wherein the antenna port parameter is the antenna port parameter used by the terminal to receive and measure the CSI reference signal in the at least one resource element.

Optionally, the processor 200 is specifically configured to:
determine the antenna port parameter from candidate antenna port parameters corresponding to the terminal according to the predefined rule.

Optionally, the predefined rule includes at least one of:
Rule 1: determining that antenna port parameters corresponding to different resource elements or CSI reference signals in resource elements are same or different according to the number of resource elements or CSI reference signals in resource elements;
Rule 2: determining that antenna port parameters are different according to at least two resource elements with a same index or CSI reference signals in the resource elements;
Rule 3: determining that antenna port parameters are same or different according to at least two resource elements with different indexes or CSI reference signals in the resource elements;
Rule 4: determining that antenna port parameters are different according to at least two resource elements with a same spatial QCL relation or CSI reference signals in the resource elements;
Rule 5: determining that antenna port parameters are same or different according to at least two resource elements with different spatial QCL relations or CSI reference signals in the resource elements.

Optionally, the processor 200 is specifically configured to:
report the reporting quantity including an antenna port parameter to the network-side device; wherein the antenna port parameter included in the reporting quantity is the antenna port parameter used by the terminal to measure and obtain the measurement result.

Optionally, the processor 200 is specifically configured to generate the reporting quantity in a following way:
reporting one reporting quantity for each resource element; or
reporting one reporting quantity for all resource elements; or
reporting one reporting quantity for every N/M resource elements, wherein N is the number of resource elements, and M is the number of measurement parameters configured or predefined by network.

Optionally, types of the resource elements include at least one of CSI resource setting, CSI resource set in CSI resource setting, CSI resource or SSB resource.

Optionally, when the network-side device configures at least two resource elements, the at least two resource elements are resource elements with same or different time-domain transmission characteristics; or
the at least two resource elements are CSI resource sets corresponding to a same periodic CSI resource setting; or
the at least two resource elements are CSI resource sets corresponding to a same semi-persistent CSI resource setting; or
the at least two resource elements are aperiodic CSI resource sets associated with an aperiodic trigger state; or
the at least two resource elements are CSI resources included in a same CSI resource setting or CSI resource set.

Optionally, the antenna port parameter includes at least one of an antenna array panel, an antenna port set, or a spatial filter.

Optionally, the processor 200 is specifically configured to:
receive the CSI reference signal in the at least one resource element configured by the network-side device on a same time domain resource or different time domain resources.

Optionally, before determining the antenna port parameter according to the configuration information of the network-side device, the processor 200 is further configured to:
receive the configuration information sent by the network-side device through higher layer signaling; or
receive the configuration information sent by the network-side device through MAC-CE signaling; or
receive the configuration information sent by the network-side device through downlink control information.

As shown in FIG. 3, a network-side device to an embodiment of the present application includes: a processor 300, a memory 301, a transceiver 302 and a bus interface.

The processor 300 is responsible for managing the bus architecture and general processing, and the memory 301 may store the data used by the processor 300 when performing the operations. The transceiver 302 is configured to receive and send the data under the control of the processor 300.

The bus architecture may include any numbers of interconnected buses and bridges, and specifically link various circuits of one or more processors represented by the processor 300 and the memory represented by the memory 301. The bus architecture may further link various other circuits such as peripheral device, voltage regulator and power management circuit, which are all well known in the art and thus will not be further described again herein. The bus interface provides an interface. The processor 300 is responsible for managing the bus architecture and general processing, and the memory 301 may store the data used by the processor 300 when performing the operations.

The procedure disclosed by the embodiment of the present application may be applied in the processor 300 or implemented by the processor 300. In the implementation process, each step of the signal processing flow may be completed by the integrated logic circuit of hardware in the processor 300 or the instruction in the form of software. The processor 300 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the present application. The general-purpose processor may be a microprocessor or any conventional processor or the like. The steps of the method disclosed in combination with the embodiments of the present application may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 301, and the processor 300 reads the information in the memory 301 and completes the steps of the signal processing flow in combination with its hardware.

Specifically, the processor 300 is configured to read the program in the memory 301 to:
send configuration information to a terminal, so that the terminal determines, according to the configuration information, an antenna port parameter that needs to be used to receive and measure a CSI reference signal in at least one resource element configured by the network-side device;
send the CSI reference signal to the terminal through the at least one resource element configured, so that the terminal performs CSI measurement on the CSI reference signal and generates a reporting quantity according to a measurement result;
receive the reporting quantity reported by the terminal.

Optionally, the configuration information of the network-side device includes:
indication information for indicating the terminal to use a same antenna port parameter or different antenna port parameters to receive and measure the CSI reference signal in the at least one resource element; or
an antenna port parameter; wherein the antenna port parameter is the antenna port parameter used by the terminal to receive and measure the CSI reference signal in the at least one resource element.

Optionally, the reporting quantity includes the antenna port parameter used by the terminal to measure and obtain the measurement result;
the processor 300 is further configured to:
determine an antenna port parameter used by the terminal to receive downlink data from a plurality of antenna port parameters corresponding to the terminal according to the reporting quantity including the antenna port parameter after receiving the reporting quantity reported by the terminal.

Optionally, types of the resource elements include at least one of CSI resource setting, CSI resource set in CSI resource setting, CSI resource or SSB resource.

Optionally, the at least two resource elements are resource elements with same or different time-domain transmission characteristics; or
the at least two resource elements are CSI resource sets corresponding to a same periodic CSI resource setting; or
the at least two resource elements are CSI resource sets corresponding to a same semi-persistent CSI resource setting; or
the at least two resource elements are aperiodic CSI resource sets associated with an aperiodic trigger state; or
the at least two resource elements are CSI resources included in a same CSI resource setting or CSI resource set.

Optionally, the antenna port parameter includes at least one of an antenna array panel, an antenna port set, or a spatial filter.

Optionally, the processor 300 is specifically configured to:
send the configuration information to the terminal through higher layer signaling; or
send the configuration information to the terminal through MAC-CE signaling; or
send the configuration information to the terminal through downlink control information.

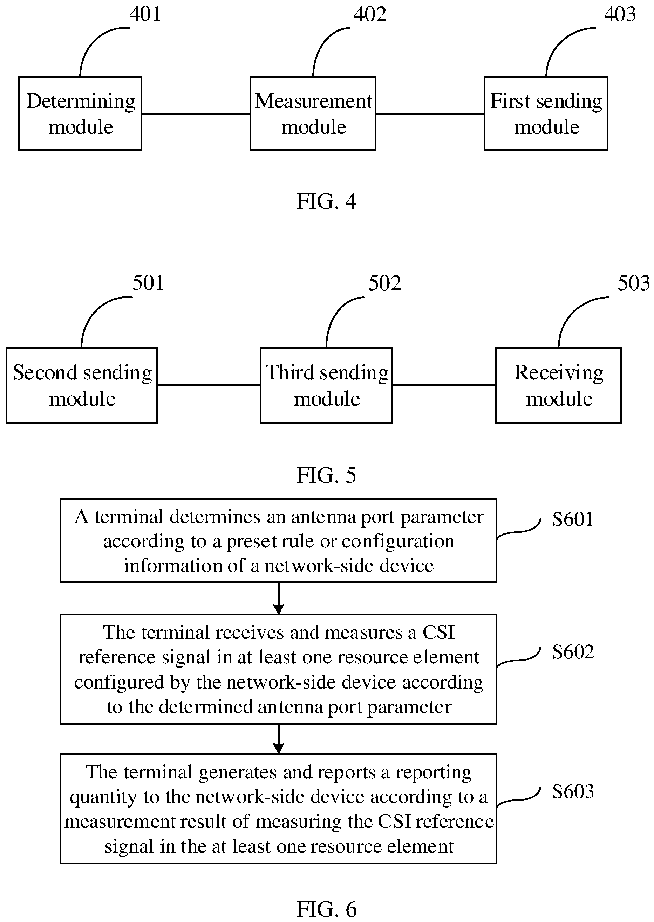

As shown in FIG. 4, a CSI measurement reporting apparatus according to an embodiment of the present application includes:
a determining module 401 configured to determine an antenna port parameter according to a predefined rule or configuration information of a network-side device;
a measurement module 402 configured to receive and measure a CSI reference signal in at least one resource element configured by the network-side device according to the determined antenna port parameter;
a first sending module 403 configured to generate and report a reporting quantity to the network-side device according to a measurement result of measuring the CSI reference signal in the at least one resource element.

Optionally, the determining module 401 is further configured to:
determine an association relationship between antenna port parameters and at least one resource element according to the predefined rule or the configuration information of the network-side device.

Optionally, the association relationship includes at least one of:
one resource element is associated with an antenna port parameter;
at least two resource elements are associated with a same antenna port parameter;
at least two resource elements are associated with different antenna port parameters;
each of at least two resource elements corresponds to one antenna port parameter.

Optionally, the configuration information of the network-side device includes:
indication information for indicating the terminal to use a same antenna port parameter or different antenna port parameters to receive and measure the CSI reference signal in the at least one resource element; or
an antenna port parameter; wherein the antenna port parameter is the antenna port parameter used by the terminal to receive and measure the CSI reference signal in the at least one resource element.

Optionally, the determining module 401 is specifically configured to:
determine the antenna port parameter from candidate antenna port parameters corresponding to the terminal according to the predefined rule.

Optionally, the predefined rule includes at least one of:
Rule 1: determining that antenna port parameters corresponding to different resource elements or CSI reference signals in resource elements are same or different according to the number of resource elements or CSI reference signals in resource elements;
Rule 2: determining that antenna port parameters are different according to at least two resource elements with a same index or CSI reference signals in the resource elements;
Rule 3: determining that antenna port parameters are same or different according to at least two resource elements with different indexes or CSI reference signals in the resource elements;
Rule 4: determining that antenna port parameters are different according to at least two resource elements with a same spatial QCL relation or CSI reference signals in the resource elements;
Rule 5: determining that antenna port parameters are same or different according to at least two resource elements with different spatial QCL relations or CSI reference signals in the resource elements.

Optionally, the first sending module 403 is specifically configured to:
report the reporting quantity including an antenna port parameter to the network-side device; wherein the antenna port parameter included in the reporting quantity is the antenna port parameter used by the terminal to measure and obtain the measurement result.

Optionally, the first sending module 403 is specifically configured to:
report one reporting quantity for each resource element; or
report one reporting quantity for all resource elements; or
report one reporting quantity for every N/M resource elements, wherein N is the number of resource elements, and M is the number of measurement parameters configured or predefined by network.

Optionally, types of the resource elements include at least one of CSI resource setting, CSI resource set in CSI resource setting, CSI resource or SSB resource.

Optionally, when the network-side device configures at least two resource elements, the at least two resource elements are resource elements with same or different time-domain transmission characteristics; or
the at least two resource elements are CSI resource sets corresponding to a same periodic CSI resource setting; or
the at least two resource elements are CSI resource sets corresponding to a same semi-persistent CSI resource setting; or
the at least two resource elements are aperiodic CSI resource sets associated with an aperiodic trigger state; or
the at least two resource elements are CSI resources included in a same CSI resource setting or CSI resource set.

Optionally, the antenna port parameter includes at least one of an antenna array panel, an antenna port set, or a spatial filter.

Optionally, the measurement module 402 receives the CSI reference signal in the at least one resource element configured by the network-side device in a following way:
receiving the CSI reference signal in the at least one resource element configured by the network-side device on a same time domain resource or different time domain resources.

Optionally, the determining module 401 is further configured to:
receive the configuration information sent by the network-side device through higher layer signaling before determining the antenna port parameter according to the configuration information of the network-side device; or
receive the configuration information sent by the network-side device through MAC-CE signaling; or
receive the configuration information sent by the network-side device through downlink control information.

As shown in FIG. 5, a CSI measurement reporting apparatus according to an embodiment of the present application includes:
a second sending module 501 configured to send configuration information to a terminal, so that the terminal determines, according to the configuration information, an antenna port parameter that needs to be used to receive and measure a CSI reference signal in at least one resource element configured by the network-side device;
a third sending module 502 configured to send the CSI reference signal to the terminal through the at least one resource element configured, so that the terminal performs CSI measurement on the CSI reference signal and generates a reporting quantity according to a measurement result;
a receiving module 503 configured to receive the reporting quantity reported by the terminal.

Optionally, the configuration information of the network-side device includes:
indication information for indicating the terminal to use a same antenna port parameter or different antenna port parameters to receive and measure the CSI reference signal in the at least one resource element; or
an antenna port parameter; wherein the antenna port parameter is the antenna port parameter used by the terminal to receive and measure the CSI reference signal in the at least one resource element.

Optionally, the reporting quantity includes the antenna port parameter used by the terminal to measure and obtain the measurement result;
the receiving module 503 is further configured to:
determine an antenna port parameter used by the terminal to receive downlink data from a plurality of antenna port parameters corresponding to the terminal according to the reporting quantity including the antenna port parameter after receiving the reporting quantity reported by the terminal.

Optionally, types of the resource elements include at least one of CSI resource setting, CSI resource set in CSI resource setting, CSI resource or SSB resource.

Optionally, the at least two resource elements are resource elements with same or different time-domain transmission characteristics; or
the at least two resource elements are CSI resource sets corresponding to a same periodic CSI resource setting; or
the at least two resource elements are CSI resource sets corresponding to a same semi-persistent CSI resource setting; or
the at least two resource elements are aperiodic CSI resource sets associated with an aperiodic trigger state; or
the at least two resource elements are CSI resources included in a same CSI resource setting or CSI resource set.

Optionally, the antenna port parameter includes at least one of an antenna array panel, an antenna port set, or a spatial filter.

Optionally, the second sending module 501 is specifically configured to:
send the configuration information to the terminal through higher layer signaling; or
send the configuration information to the terminal through MAC-CE signaling; or
send the configuration information to the terminal through downlink control information.

An embodiment of the present application further provides a computer storage medium storing computer program instructions, where the instructions, when running on a computer, cause the computer to perform the steps of any CSI measurement reporting method on the terminal side described above.

An embodiment of the present application further provides a computer storage medium storing computer program instructions, where the instructions, when running on a computer, cause the computer to perform the steps of any CSI measurement reporting method on the network-side device side described above.

Based on the same inventive concept, an embodiment of the present application provides a CSI measurement reporting method. Since this method corresponds to the terminal in the CSI measurement reporting system of the embodiments of the present application and the principle of this method to solve the problem is similar to that of the system, the implementations of this method can refer to the implementations of the system, and the repeated description thereof will be omitted here.

As shown in FIG. 6, a CSI measurement reporting method according to an embodiment of the present application includes:
Step S601: a terminal determines an antenna port parameter according to a predefined rule or configuration information of a network-side device;
Step S602: the terminal receives and measures a CSI reference signal in at least one resource element configured by the network-side device according to the determined antenna port parameter;
Step S603: the terminal generates and reports a reporting quantity to the network-side device according to a measurement result of measuring the CSI reference signal in the at least one resource element.

Here, the terminal may determine, according to predefined rule, the antenna port parameter used to receive and measure the CSI reference signal in at least one resource element configured by the network-side device; or the terminal may determine, according to the configuration information sent by the network-side device, the antenna port parameter used to receive and measure the CSI reference signal in at least one resource element configured by the network-side device.

When the terminal determines the antenna port parameter according to the predefined rule, the terminal stores the predefined rule in advance. When the terminal needs to receive the reference signal in at least one resource element configured by the network-side device, the terminal determines the antenna port parameter required to receive the reference signal in at least one resource element according to the predefined rule.

In an optional embodiment, the predefined rule in the embodiment of the present application includes at least one of:
Rule 1: determining that antenna port parameters corresponding to different resource elements or CSI reference signals in resource elements are same or different according to the number of resource elements or CSI reference signals in resource elements;
Rule 2: determining that antenna port parameters are different according to at least two resource elements with a same index or CSI reference signals in the resource elements;
Rule 3: determining that antenna port parameters are same or different according to at least two resource elements with different indexes or CSI reference signals in the resource elements;
Rule 4: determining that antenna port parameters are different according to at least two resource elements with a same spatial QCL relation or CSI reference signals in the resource elements;
Rule 5: determining that antenna port parameters are same or different according to at least two resource elements with different spatial QCL relations or CSI reference signals in the resource elements.

It should be noted that the network-side device sends the resource configuration information to the terminal before the terminal determines the antenna port parameter used to receive the CSI reference signal in at least one resource element configured by the network-side device, and the terminal can determine the number of resource elements configured by the network-side device for the terminal and the specific resource elements according to the resource configuration information sent by the network-side device. The terminal determines the antenna port parameter according to the resource configuration information sent by the network-side device and according to at least one of the above-mentioned rules.

When the network-side device configures one resource element for the terminal, since this resource element may include a plurality of resource elements with smaller granularity, the antenna port parameter that needs to be used may be determined according to at least one of the above-mentioned rules 1 to 5 based on the resource elements with smaller granularity included in this resource element when determining to receive the CSI reference signal in one resource element configured by the network-side device.

For example, if the network-side device configures a CSI resource set for the terminal and the CSI resource set includes a plurality of CSI resources, then the terminal may determine the antenna port parameter that needs to be used according to at least one of the above-mentioned rules 1 to 5 based on the plurality of CSI resources included in the CSI resource set.

If the terminal determines at least two resource elements configured for the terminal according to the resource configuration information sent by the network-side device, the terminal may determine the antenna port parameter according to at least one of the above-mentioned rules 1 to 5.

When the terminal determines the antenna port parameter according to the configuration information of the network-side device, the network-side device sends the configuration information to the terminal, and the terminal determines the antenna port parameter used to receive the CSI reference signal in at least one resource element according to the configuration information sent by the network-side device.

In an optional embodiment, the configuration information sent by the network-side device to the terminal includes:
indication information for indicating the terminal to use a same antenna port parameter or different antenna port parameters to receive and measure the CSI reference signal in the at least one resource element; or
an antenna port parameter; wherein the antenna port parameter is the antenna port parameter used by the terminal to receive and measure the CSI reference signal in the at least one resource element.

Furthermore, the network-side device may also notify the terminal of the antenna port parameter used by the network-side device to send the CSI reference signal of at least one resource element.

In an embodiment of the present application, the terminal determines an association relationship between antenna port parameters and at least one resource element according to the predefined rule or the configuration information of the network-side device.

Here, when the network-side device configures one resource element, the association relationship includes: one resource element is associated with an antenna port parameter.

When the network-side device configures at least two resource elements for the terminal, the association relationship includes at least one of:
at least two resource elements are associated with a same antenna port parameter;
at least two resource elements are associated with different antenna port parameters;
each of at least two resource elements corresponds to one antenna port parameter.

In the embodiment of the present application, after the terminal determines the antenna port parameter used to receive the CSI reference signal in at least one resource element configured by the network-side device, the terminal receives and measures the CSI reference signal in at least one resource element configured by the network-side device through the determined antenna port parameter, and sends the reporting quantity to the network-side device.

In an optional embodiment, when the terminal receives and measures the CSI reference signal in at least one resource element configured by the network-side device through the determined antenna port parameter, the terminal receives the CSI reference signal in the at least one resource element configured by the network-side device on a same time domain resource or different time domain resources.

In an implementation, the terminal may determine the reporting quantity to be sent to the network-side device in the following way:
the terminal reports one reporting quantity for each resource element; or
the terminal reports one reporting quantity for all resource elements; or
the terminal reports one reporting quantity for every N/2 resource elements, where N is the number of resource elements; or
the terminal reports one reporting quantity for every N/M resource elements, where N is the number of resource elements, and M is the number of measurement parameters configured or predefined by network.

Optionally, types of the resource elements include at least one of CSI resource setting, CSI resource set in CSI resource setting, CSI resource or SSB resource.

Optionally, when the network side configures at least two resource elements for the terminal, the at least two resource elements are resource elements with same or different time-domain transmission characteristics; or
the at least two resource elements are CSI resource sets corresponding to a same periodic CSI resource setting; or
the at least two resource elements are CSI resource sets corresponding to a same semi-persistent CSI resource setting; or
the at least two resource elements are aperiodic CSI resource sets associated with an aperiodic trigger state; or
the at least two resource elements are CSI resources included in a same CSI resource setting or CSI resource set.

Optionally, the antenna port parameter includes at least one of an antenna array panel, an antenna port set, or a spatial filter.

Based on the same inventive concept, an embodiment of the present application provides a CSI measurement reporting method. Since this method corresponds to the network-side device in the CSI measurement reporting system of the embodiments of the present application and the principle of this method to solve the problem is similar to that of the system, the implementations of this method can refer to the implementations of the system, and the repeated description thereof will be omitted here.

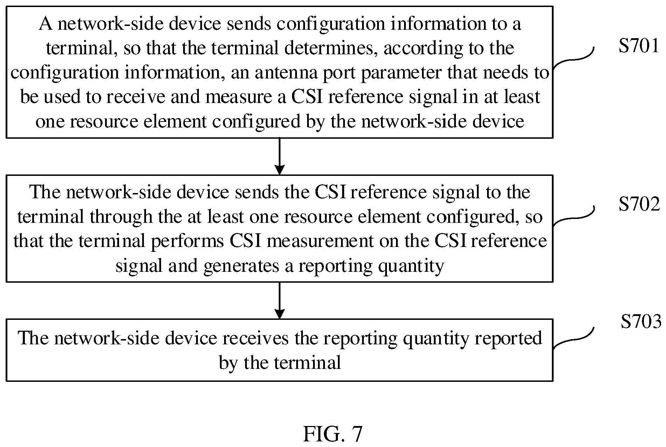

As shown in FIG. 7, a CSI measurement reporting method according to an embodiment of the present application includes:
Step S701: a network-side device sends configuration information to a terminal, so that the terminal determines, according to the configuration information, an antenna port parameter that needs to be used to receive and measure a CSI reference signal in at least one resource element configured by the network-side device;
Step S702: the network-side device sends the CSI reference signal to the terminal through the at least one resource element configured, so that the terminal performs CSI measurement on the CSI reference signal;
Step S703: the network-side device receives the reporting quantity reported by the terminal.

In an optional embodiment, the network-side device may send the configuration information to the terminal specifically in one of the following ways.

In the first way, the network-side device sends the configuration information to the terminal through higher layer signaling.

Here, the higher layer signaling parameters include at least one of: the configuration in a CSI reporting setting or its underlying parameter configuration, the beam reporting configuration based on group or its underlying parameter configuration, the configuration in a CSI resource element or its underlying parameter configuration.

In the second way, the network-side device sends the configuration information to the terminal through MAC-CE (MAC Control Element) signaling.

In the third way, the network-side device sends the configuration information to the terminal through Downlink Control Information (DCI).

Here, the configuration information sent by the network-side device to the terminal includes:
indication information for indicating the terminal to use a same antenna port parameter or different antenna port parameters to receive and measure the CSI reference signal in the at least one resource element; or
an antenna port parameter; wherein the antenna port parameter is the antenna port parameter used by the terminal to receive and measure the CSI reference signal in the at least one resource element.

For example, the network-side device instructs the terminal to use the same antenna port parameter to receive and measure the CSI reference signal in at least one resource element by sending the configuration information to the terminal; or
the network-side device instructs the terminal to use different antenna port parameters to receive and measure the CSI reference signal in at least one resource element by sending the configuration information to the terminal; or
the network-side device indicates the antenna port parameter used to receive and measure the CSI reference signal in at least one resource element to the terminal by sending the configuration information to the terminal; for example, the network-side device instructs the terminal to use the antenna array panel i and/or antenna array panel j to receive and measure the CSI reference signal in at least one resource element; or the network-side device instructs the terminal to use the antenna port group m and/or antenna port group n to receive and measure the CSI reference signal in at least one resource element.

Furthermore, the network-side device may also notify the terminal of the antenna port parameter used by the network-side device to send the CSI reference signal of at least one resource element.

After the network-side device receives the reporting quantity reported by the terminal, the network-side device may determine an antenna port parameter used by the terminal to receive the downlink data from the a plurality of antenna port parameters corresponding to the terminal according to the reporting quantity sent by the terminal.

Furthermore, the network-side device may also determine an antenna port parameter used to send the downlink data to the terminal from a plurality of antenna port parameters.

Optionally, types of the resource elements include at least one of CSI resource setting, CSI resource set in CSI resource setting, CSI resource or SSB resource.

It should be understood by those skilled in the art that the embodiments of the present application can provide methods, systems and computer program products. Thus the present application can take the form of hardware embodiments alone, software embodiments alone, or embodiments combining the software and hardware aspects. Also the present application can take the form of computer program products implemented on one or more computer usable storage mediums (including but not limited to magnetic disk memories, CD-ROMs, optical memories and the like) including computer usable program codes therein.

The present application is described by reference to the flow charts and/or the block diagrams of the methods, the devices (systems) and the computer program products according to the present application. It should be understood that each process and/or block in the flow charts and/or the block diagrams, and a combination of processes and/or blocks in the flow charts and/or the block diagrams can be implemented by the computer program instructions. These computer program instructions can be provided to a general-purpose computer, a dedicated computer, an embedded processor, or a processor of another programmable data processing device to produce a machine, so that an apparatus for implementing the functions specified in one or more processes of the flow charts and/or one or more blocks of the block diagrams is produced by the instructions executed by the computer or the processor of another programmable data processing device.

These computer program instructions can also be stored in a computer readable memory which is capable of guiding the computer or another programmable data processing device to operate in a particular way, so that the instructions stored in the computer readable memory produce a manufacture including the instruction apparatus which implements the functions specified in one or more processes of the flow charts and/or one or more blocks of the block diagrams.

These computer program instructions can also be loaded onto the computer or another programmable data processing device, so that a series of operation steps are performed on the computer or another programmable device to produce the computer-implemented processing. Thus the instructions executed on the computer or another programmable device provide steps for implementing the functions specified in one or more processes of the flow charts and/or one or more blocks of the block diagrams.

Evidently those skilled in the art can make various modifications and variations to the present application without departing from the spirit and scope of the present application. Thus the present application is also intended to encompass these modifications and variations therein as long as these modifications and variations to the present application come into the scope of the claims of the present application and their equivalents.

## Claims

1. A CSI measurement reporting method, comprising:
determining, by a terminal, an antenna port parameter according to a first predefined rule or configuration information of a network-side device;
receiving and measuring, by the terminal, a Channel State Information, CSI, reference signal in at least one resource element configured by the network-side device according to determined antenna port parameter;
generating and reporting, by the terminal, a reporting quantity to the network-side device according to a measurement result of measuring the CSI reference signal in the at least one resource element.

2. The method of claim 1, further comprising:
determining, by the terminal, an association relationship between antenna port parameters and at least one resource element according to a second predefined rule or the configuration information of the network-side device.

3. The method of claim 2, wherein the association relationship comprises at least one of:
one resource element is associated with an antenna port parameter;
at least two resource elements are associated with a same antenna port parameter;
at least two resource elements are associated with different antenna port parameters; or
each of at least two resource elements corresponds to one antenna port parameter.

4. The method of claim 1, wherein the configuration information of the network-side device comprises:
indication information for indicating the terminal to use a same antenna port parameter or different antenna port parameters to receive and measure the CSI reference signal in the at least one resource element; or
an antenna port parameter; wherein the antenna port parameter is the antenna port parameter used by the terminal to receive and measure the CSI reference signal in the at least one resource element.

5. The method of claim 1, wherein determining, by the terminal, the antenna port parameter according to the first predefined rule, comprises:
determining, by the terminal, the antenna port parameter from candidate antenna port parameters corresponding to the terminal according to the predefined rule.

6. The method of claim 1 or 5, wherein the first predefined rule comprises at least one of:
Rule 1: determining that antenna port parameters corresponding to different resource elements or CSI reference signals in resource elements are same or different according to a quantity of resource elements or a quantity of CSI reference signals in resource elements;
Rule 2: determining that antenna port parameters are different according to at least two resource elements with a same index or CSI reference signals in the resource elements;
Rule 3: determining that antenna port parameters are same or different according to at least two resource elements with different indexes or CSI reference signals in the resource elements;
Rule 4: determining that antenna port parameters are different according to at least two resource elements with a same spatial Quasi-Co-Location, QCL, relation or CSI reference signals in the resource elements;
Rule 5: determining that antenna port parameters are same or different according to at least two resource elements with different spatial QCL relations or CSI reference signals in the resource elements; or
Rule 6: a predefined correspondence between resource elements and antenna port parameters.

7. The method of claim 1, wherein the reporting, by the terminal, the generated reporting quantity to the network-side device, comprises:
reporting, by the terminal, the reporting quantity comprising an antenna port parameter to the network-side device; wherein the antenna port parameter comprised in the reporting quantity is the antenna port parameter used by the terminal to measure and obtain the measurement result.

8. The method of claim 7, wherein the terminal generates the reporting quantity in a following way:
reporting, by the terminal, one reporting quantity for each resource element; or
reporting, by the terminal, one reporting quantity for all resource elements; or
reporting, by the terminal, one reporting quantity for every N/M resource elements, wherein N is a quantity of resource elements, and M is a quantity of reporting quantities configured or predefined by network.

9. The method of any one of claims 1 to 5, 7 and 8, wherein types of the resource elements comprise at least one of CSI resource setting, CSI resource set in the CSI resource setting, CSI resource or SSB resource.

10. The method of claim 9, wherein in response to the network-side device configuring at least two resource elements, the at least two resource elements are resource elements with same or different time-domain transmission characteristics; or
the at least two resource elements are CSI resource sets corresponding to a same periodic CSI resource setting; or
the at least two resource elements are CSI resource sets corresponding to a same semi-persistent CSI resource setting; or
the at least two resource elements are aperiodic CSI resource sets associated with an aperiodic trigger state; or
the at least two resource elements are CSI resources comprised in a same CSI resource setting or CSI resource set.

11. The method of any one of claims 1 to 5, 7 and 8, wherein the terminal receives the CSI reference signal in the at least one resource element configured by the network-side device in a following way:
receiving, by the terminal, the CSI reference signal in the at least one resource element configured by the network-side device on a same time domain resource or different time domain resources.

12. A CSI measurement reporting method, comprising:
sending, by a network-side device, configuration information to a terminal, so that the terminal determines, according to the configuration information, an antenna port parameter that needs to be used to receive and measure a CSI reference signal in at least one resource element configured by the network-side device;
sending, by the network-side device, the CSI reference signal to the terminal through the at least one resource element configured, so that the terminal performs CSI measurement on the CSI reference signal and generates a reporting quantity according to a measurement result;
receiving, by the network-side device, the reporting quantity reported by the terminal.

13. The method of claim 12, wherein the configuration information of the network-side device comprises:
indication information for indicating the terminal to use a same antenna port parameter or different antenna port parameters to receive and measure the CSI reference signal in the at least one resource element; or
an antenna port parameter; wherein the antenna port parameter is the antenna port parameter used by the terminal to receive and measure the CSI reference signal in the at least one resource element.

14. The method of claim 12, wherein the reporting quantity comprises the antenna port parameter used by the terminal to measure and obtain the measurement result;
after the network-side device receives the reporting quantity reported by the terminal, the method further comprises:
determining, by the network-side device, an antenna port parameter used by the terminal to receive downlink data from a plurality of antenna port parameters corresponding to the terminal according to the reporting quantity comprising the antenna port parameter.

15. The method of any one of claims 12 to 14, wherein types of the resource elements comprise at least one of CSI resource setting, CSI resource set in the CSI resource setting, CSI resource or SSB resource.

16. The method of claim 15, wherein the at least two resource elements are resource elements with same or different time-domain transmission characteristics; or
the at least two resource elements are CSI resource sets corresponding to a same periodic CSI resource setting; or
the at least two resource elements are CSI resource sets corresponding to a same semi-persistent CSI resource setting; or
the at least two resource elements are aperiodic CSI resource sets associated with an aperiodic trigger state; or
the at least two resource elements are CSI resources comprised in a same CSI resource setting or CSI resource set.

17. A terminal, comprising a processor, a memory and a transceiver;
wherein the processor is configured to read a program in the memory to:
determine an antenna port parameter according to a first predefined rule or configuration information of a network-side device;
receive and measure a Channel State Information, CSI, reference signal in at least one resource element configured by the network-side device according to the determined antenna port parameter;
generate and report a reporting quantity to the network-side device according to a measurement result of measuring the CSI reference signal in the at least one resource element.

18. The terminal of claim 17, wherein the processor is further configured to:
determine an association relationship between antenna port parameters and at least one resource element according to a second predefined rule or the configuration information of the network-side device.

19. The terminal of claim 18, wherein the association relationship comprises at least one of:
one resource element is associated with an antenna port parameter;
at least two resource elements are associated with a same antenna port parameter;
at least two resource elements are associated with different antenna port parameters;
each of at least two resource elements corresponds to one antenna port parameter.

20. The terminal of claim 17, wherein the configuration information of the network-side device comprises:
indication information for indicating the terminal to use a same antenna port parameter or different antenna port parameters to receive and measure the CSI reference signal in the at least one resource element; or
an antenna port parameter; wherein the antenna port parameter is the antenna port parameter used by the terminal to receive and measure the CSI reference signal in the at least one resource element.

21. The terminal of claim 17, wherein the processor is configured to:
determine the antenna port parameter from candidate antenna port parameters corresponding to the terminal according to the first predefined rule.

22. The terminal of claim 17 or 21, wherein the first predefined rule comprises at least one of:
Rule 1: determining that antenna port parameters corresponding to different resource elements or CSI reference signals in resource elements are same or different according to a quantity of resource elements or CSI reference signals in resource elements;
Rule 2: determining that antenna port parameters are different according to at least two resource elements with a same index or CSI reference signals in the resource elements;
Rule 3: determining that antenna port parameters are same or different according to at least two resource elements with different indexes or CSI reference signals in the resource elements;
Rule 4: determining that antenna port parameters are different according to at least two resource elements with a same spatial Quasi-Co-Location, QCL, relation or CSI reference signals in the resource elements;
Rule 5: determining that antenna port parameters are same or different according to at least two resource elements with different spatial QCL relations or CSI reference signals in the resource elements; or
Rule 6: a preset correspondence between resource elements and antenna port parameters.

23. The terminal of claim 17, wherein the processor is configured to:
report the reporting quantity comprising an antenna port parameter to the network-side device; wherein the antenna port parameter comprised in the reporting quantity is the antenna port parameter used by the terminal to measure and obtain the measurement result.

24. The terminal of claim 23, wherein the processor is configured to determine the reporting quantity to be sent to the network-side device in a following way:
reporting one reporting quantity for each resource element; or
reporting one reporting quantity for all resource elements; or
reporting one reporting quantity for every N/M resource elements, wherein N is a quantity of resource elements, and M is a quantity of reporting quantities configured or predefined by network.

25. The terminal of any one of claims 17 to 21, 23 and 24, wherein types of the resource elements comprise at least one of CSI resource setting, CSI resource set in the CSI resource setting, CSI resource or SSB resource.

26. The terminal of claim 25, wherein when the network-side device configures at least two resource elements, the at least two resource elements are resource elements with same or different time-domain transmission characteristics; or
the at least two resource elements are CSI resource sets corresponding to a same periodic CSI resource setting; or
the at least two resource elements are CSI resource sets corresponding to a same semi-persistent CSI resource setting; or
the at least two resource elements are aperiodic CSI resource sets associated with an aperiodic trigger state; or
the at least two resource elements are CSI resources comprised in a same CSI resource setting or CSI resource set.

27. The terminal of any one of claims 17 to 21, 23 and 24, wherein the processor is configured to receive the CSI reference signal in the at least one resource element configured by the network-side device in a following way:
receiving the CSI reference signal in the at least one resource element configured by the network-side device on a same time domain resource or different time domain resources.

28. A network-side device, comprising a processor, a memory and a transceiver;
wherein the processor is configured to read a program in the memory to:
send configuration information to a terminal, so that the terminal determines, according to the configuration information, an antenna port parameter that needs to be used to receive and measure a CSI reference signal in at least one resource element configured by the network-side device;
send the CSI reference signal to the terminal through the at least one resource element configured, so that the terminal performs CSI measurement on the CSI reference signal and generates a reporting quantity according to a measurement result;
receive the reporting quantity reported by the terminal.

29. The network-side device of claim 28, wherein the configuration information of the network-side device comprises:
indication information for indicating the terminal to use a same antenna port parameter or different antenna port parameters to receive and measure the CSI reference signal in the at least one resource element; or
an antenna port parameter; wherein the antenna port parameter is the antenna port parameter used by the terminal to receive and measure the CSI reference signal in the at least one resource element.

30. The network-side device of claim 28, wherein the reporting quantity comprises the antenna port parameter used by the terminal to measure and obtain the measurement result;
the processor is further configured to:
determine an antenna port parameter used by the terminal to receive downlink data from a plurality of antenna port parameters corresponding to the terminal according to the reporting quantity comprising the antenna port parameter after receiving the reporting quantity reported by the terminal.

31. The network-side device of any one of claims 28 to 30, wherein types of the resource elements comprise at least one of CSI resource setting, CSI resource set in the CSI resource setting, CSI resource or SSB resource.

32. The network-side device of claim 31, wherein the at least two resource elements are resource elements with same or different time-domain transmission characteristics; or
the at least two resource elements are CSI resource sets corresponding to a same periodic CSI resource setting; or
the at least two resource elements are CSI resource sets corresponding to a same semi-persistent CSI resource setting; or
the at least two resource elements are aperiodic CSI resource sets associated with an aperiodic trigger state; or
the at least two resource elements are CSI resources comprised in a same CSI resource setting or CSI resource set.

33. A CSI measurement reporting apparatus, comprising:
a determining module configured to determine an antenna port parameter according to a first predefined rule or configuration information of a network-side device;
a measurement module configured to receive and measure a Channel State Information, CSI, reference signal in at least one resource element configured by the network-side device according to the determined antenna port parameter;
a first sending module configured to generate and report a reporting quantity to the network-side device according to a measurement result of measuring the CSI reference signal in the at least one resource element.

34. The apparatus of claim 33, wherein the determining module is further configured to:
determine an association relationship between antenna port parameters and at least one resource element according to a second predefined rule or the configuration information of the network-side device.

35. The apparatus of claim 34, wherein the association relationship comprises at least one of:
one resource element is associated with an antenna port parameter;
at least two resource elements are associated with a same antenna port parameter;
at least two resource elements are associated with different antenna port parameters; or
each of at least two resource elements corresponds to one antenna port parameter.

36. The apparatus of claim 33, wherein the configuration information of the network-side device comprises:
indication information for indicating the terminal to use a same antenna port parameter or different antenna port parameters to receive and measure the CSI reference signal in the at least one resource element; or
an antenna port parameter; wherein the antenna port parameter is the antenna port parameter used by the terminal to receive and measure the CSI reference signal in the at least one resource element.

37. The apparatus of claim 33, wherein the determining module is configured to:
determine the antenna port parameter from candidate antenna port parameters corresponding to the terminal according to the first predefined rule.

38. The apparatus of claim 33 or 37, wherein the first predefined rule comprises at least one of:
Rule 1: determining that antenna port parameters corresponding to different resource elements or CSI reference signals in resource elements are same or different according to a quantity of resource elements or CSI reference signals in resource elements;
Rule 2: determining that antenna port parameters are different according to at least two resource elements with a same index or CSI reference signals in the resource elements;
Rule 3: determining that antenna port parameters are same or different according to at least two resource elements with different indexes or CSI reference signals in the resource elements;
Rule 4: determining that antenna port parameters are different according to at least two resource elements with a same spatial Quasi-Co-Location, QCL, relation or CSI reference signals in the resource elements;
Rule 5: determining that antenna port parameters are same or different according to at least two resource elements with different spatial QCL relations or CSI reference signals in the resource elements; or
Rule 6: a preset correspondence between resource elements and antenna port parameters.

39. The apparatus of claim 33, wherein the first sending module is configured to:
report the reporting quantity comprising an antenna port parameter to the network-side device; wherein the antenna port parameter comprised in the reporting quantity is the antenna port parameter used by the terminal to measure and obtain the measurement result.

40. The apparatus of claim 39, wherein the first sending module is configured to:
reporting one reporting quantity for each resource element; or
reporting one reporting quantity for all resource elements; or
reporting one reporting quantity for every N/M resource elements, wherein N is a quantity of resource elements, and M is a quantity of reporting quantities configured or predefined by network.

41. The apparatus of any one of claims 33 to 37, 39 and 40, wherein types of the resource elements comprise at least one of CSI resource setting, CSI resource set in the CSI resource setting, CSI resource or SSB resource.

42. The apparatus of claim 41, wherein when the network-side device configures at least two resource elements, the at least two resource elements are resource elements with same or different time-domain transmission characteristics; or
the at least two resource elements are CSI resource sets corresponding to a same periodic CSI resource setting; or
the at least two resource elements are CSI resource sets corresponding to a same semi-persistent CSI resource setting; or
the at least two resource elements are aperiodic CSI resource sets associated with an aperiodic trigger state; or
the at least two resource elements are CSI resources comprised in a same CSI resource setting or CSI resource set.

43. The apparatus of any one of claims 33 to 37, 39 and 40, wherein the measurement module receives the CSI reference signal in the at least one resource element configured by the network-side device in a following way:
receiving the CSI reference signal in the at least one resource element configured by the network-side device on a same time domain resource or different time domain resources.

44. A CSI measurement reporting apparatus, comprising:
a second sending module configured to send configuration information to a terminal, so that the terminal determines, according to the configuration information, an antenna port parameter that needs to be used to receive and measure a CSI reference signal in at least one resource element configured by the network-side device;
a third sending module configured to send the CSI reference signal to the terminal through the at least one resource element configured, so that the terminal performs CSI measurement on the CSI reference signal and generates a reporting quantity according to a measurement result;
a receiving module configured to receive the reporting quantity reported by the terminal.

45. The apparatus of claim 44, wherein the configuration information of the network-side device comprises:
indication information for indicating the terminal to use a same antenna port parameter or different antenna port parameters to receive and measure the CSI reference signal in the at least one resource element; or
an antenna port parameter; wherein the antenna port parameter is the antenna port parameter used by the terminal to receive and measure the CSI reference signal in the at least one resource element.

46. The apparatus of claim 44, wherein the reporting quantity comprises the antenna port parameter used by the terminal to measure and obtain the measurement result;
the receiving module is further configured to:
determine an antenna port parameter used by the terminal to receive downlink data from a plurality of antenna port parameters corresponding to the terminal according to the reporting quantity comprising the antenna port parameter after receiving the reporting quantity reported by the terminal.

47. The apparatus of any one of claims 44 to 46, wherein types of the resource elements comprise at least one of CSI resource setting, CSI resource set in the CSI resource setting, CSI resource or SSB resource.

48. The apparatus of claim 47, wherein the at least two resource elements are resource elements with same or different time-domain transmission characteristics; or
the at least two resource elements are CSI resource sets corresponding to a same periodic CSI resource setting; or
the at least two resource elements are CSI resource sets corresponding to a same semi-persistent CSI resource setting; or
the at least two resource elements are aperiodic CSI resource sets associated with an aperiodic trigger state; or
the at least two resource elements are CSI resources comprised in a same CSI resource setting or CSI resource set.

49. A computer storage medium storing computer program instructions, wherein the instructions, when running on a computer, cause the computer to perform the method of any one of claims 1 to 11 or the method of any one of claims 12 to 16.
